# EUROPÄISCHE PATENTSCHRIFT

(11) **EP 2 373 706 B1**
(45) Veröffentlichungstag und Bekanntmachung des Hinweises auf die Patenterteilung: **08.06.2016**
(21) Anmeldenummer: 09765068.3
(22) Anmeldetag: 25.11.2009
(51) Int. Cl.: C08F 216/14, C08F 222/06, C04B 16/04, C08F 2/02

(54) **WASSERFREI HERSTELLBARE POLYMERISATIONSMISCHUNG**
POLYMERIZATION MIXTURE THAT CAN BE PRODUCED WITHOUT WATER
MÉLANGE DE POLYMÉRISATION POUVANT ÊTRE PRODUIT SANS EAU

(30) Priorität: 08.12.2008 EP 08170959
(43) Veröffentlichungstag der Anmeldung: 12.10.2011
(73) Patentinhaber: Construction Research & Technology GmbH, 83308 Trostberg (DE)
(72) Erfinder: ALBRECHT, Gerhard, 83209 Prien (DE); HOMMER, Herbert, 84453 Mühldorf (DE); WOHLHAUPTER, Thomas, 83125 Eggstaett (DE)
(86) Internationale Anmeldenummer: PCT/EP2009/065784
(87) Internationale Veröffentlichungsnummer: WO 2010/076091

(56) Entgegenhaltungen:
- EP-A2- 1 258 502
- WO-A1-2007/126926
- WO-A2-2005/075529

## Beschreibung

Die vorliegende Erfindung betrifft ein Verfahren zur Herstellung einer Copolymer aufweisenden Polymerisationsmischung, die Copolymer aufweisende Polymerisationsmischung sowie deren Verwendung.

Es ist bekannt, dass man wässrige Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, Feststoffagglomerate aufzubrechen, die gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, Gips oder Anhydrit enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im abgebundenen Baustoff führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis insbesondere Copolymere eingesetzt, welche durch radikalische Copolymerisation von Säuremonomeren mit Polyethermakromonomeren hergestellt werden.

In der WO 2005/075529 werden in wässriger Lösung synthetisierte Copolymere beschrieben, welche neben Säuremonomer-Struktureinheiten als Polyethermakromonomer-Struktureinheiten Vinyloxypoly(ethylenglykol)-Struktureinheiten aufweisen. Wässrige Lösungen, die derartige Copolymertypen enthalten, sind als Hochleistungsfließmittel weit verbreitet, da diese vorzügliche Anwendungseigenschaften aufweisen.

Der relativ hohe Wassergehalt derartiger wässriger Copolymerlösungen kann bei deren Herstellung jedoch folgende Nachteile bewirken: Die Raumzeitausbeute ist nicht optimal, da Wasser nicht als Reaktand, sondern als Lösungsmittel vorliegt. Weiterhin entsteht durch das Lösungsmittel Wasser ein zusätzlicher Aufwand bei Lagerung und Transport. Die Entfernung des Wassers durch geeignete Trocknungsverfahren ist verhältnismäßig aufwendig.

Die der vorliegenden Erfindung zugrunde liegende Aufgabe ist es somit, ein wirtschaftliches Verfahren zur Herstellung von Copolymeren bereit zu stellen, welche als Dispergiermittel für hydraulische Bindemittel, speziell als Fließmittel, gute Eigenschaften zeigen.

Die Lösung dieser Aufgabe ist ein Verfahren zur Herstellung einer Copolymer aufweisenden Polymerisationsmischung in welchem ein Vinyloxyalkylpolyetherderivat mit einem Säuremonomerester unter Bildung des Copolymers in Anwesenheit eines radikalischen Polymerisationsinitiators durch radikalische Polymerisation umgesetzt wird, wobei die radikalische Polymerisation in einem Medium abläuft, welches weniger als 25 Gew.-% Wasser sowie in der Gesamtheit mehr als 60 Gew.-% Copolymer, Vinyloxyalkylpolyetherderivat und Säuremonomerester enthält, das molare Verhältnis von eingesetztem Säuremonomerester zum eingesetzten Vinyloxyalkylpolyetherderivat 20 : 1 bis 1 : 1 beträgt und das Vinyloxyalkylpolyetherderivat vorliegt gemäß der allgemeinen Formel (I)

(1) H₂C=CH-O-(AO)ₐ-R^{A}

mit R^{A} gleich oder verschieden sowie repräsentiert durch -CH₂-C(CH₃)₂-OH, eine lineare oder verzweigte C₁-C₁₂ Alkylgruppe, C₁-C₈ Cycloalkylgruppe, Phenylgruppe oder C₇-C₁₂ Arylalkylgruppe,
A gleich oder verschieden sowie repräsentiert durch CₓH₂ₓ mit x = 2, 3, 4 und/oder 5 sowie
a gleich oder verschieden sowie repräsentiert durch eine ganze Zahl von 5 - 350,
das Molverhältnis von eingesetztem Vinyloxyalkylpolyetherderivat zum eingesetzten radikalischen Polymerisationsinitiator 2 bis 100 beträgt und das eingesetzte Vinyloxyalkylpolyetherderivat in der Form bereitgestellt wird, dass dem eingesetzen Vinyloxyalkylpolyetherderivat 0,1 ppm bis 10000 ppm eines als organische Verbindung vorliegenden Stabilsators zugesetzt ist, der sich für die Hemmung der oxidativen Zersetzung von in Polyethern vorhandenen Alkoxygruppen eignet und/oder das eingesetzte Vinyloxyalkylpolyetherderivat unter Abreicherung von gelöstem Sauerstoff mit gelöstem Stickstoff angereichert ist. Die erfindungsgemäßen Säuremonomerester sind radikalisch copolymerisierbare, mindestens eine Kohlenstoffdoppelbindung aufweisenden Monomere, welche durch Hydrolyse oder alkalische Verseifung in ein mindestens ein Säurefunktion enthaltendes Säuremomomer umgesetzt werden können. Da Säuremonomerester (Carbonsäureester) eingesetzt werden, werden neutrale Struktureinheiten im Copolymer erhalten, die sich (z.B. im Beton) alkalisch verseifen lassen. Erst während der Anwendung werden somit die für die Wirkung benötigten negativen Ladungen erzeugt (die unter den alkalischen Anwendungsbedingungen abspaltbare Estergruppe wirkt dann praktisch als eine Art Schutzgruppe für die Carbonsäurefunktion). Säuremonomeranhydride, wie Maleinsäureanhydrid, hydrolysieren jedoch schon sobald diese mit Wasser in Kontakt geraten.

Unter Abreicherung von gelöstem Sauerstoff mit gelöstem Stickstoff anreichern bedeutet, dass der Anteil an gelöstem Sauerstoff herabgesetzt wird und der Anteil an gelöstem Stickstoff erhöht wird.

Die mit dem erfindungsgemäßen Verfahren erhältliche Copolymer aufweisende Polymerisationsmischung ist ein qualitativ hochwertiges Dispergiermittel, welches aufgrund des niedrigen Wassergehalts mit einer hohen Raumzeitausbeute hergestellt werden kann. Der Lager- und Transportaufwand ist entsprechend gering. Weiterhin ist die mit dem erfindungsgemäßen Verfahren erhältliche Copolymer aufweisende Polymerisationsmischung in Wasser, also auch in wässrigen Bindemittelsystemen, normalerweise besonders gut löslich. Die Qualität des erhaltenen Verfahrensprodukts als Dispergiermittel bzw. Fließmittel ist ausgezeichnet. Allgemein kann gesagt werden, dass das erfindungsgemäße Verfahren in besonders wirtschaftlicher Art und Weise ein Qualitätsprodukt hervorbringt.

In der Regel werden als Säuremonomerester Ester der Methacrylsäure, Ester der Maleinsäure und/oder Ester der Acrylsäure, bevorzugt Methylacrylat, Ethylacrylat, n-Butylacrylat, und/oder 2-Ethylhexylacrylat, eingesetzt. Als Säuremonomerester sind weiterhin einsetzbar n-Propylacrylat, Isopropylacrylat, Methylmethacrylat und/oder Ethylmethacrylat.

Normalerweise beträgt die Temperatur in dem Medium, in dem die radikalische Polymerisation abläuft, während der radikalischen Polymerisation zwischen 40 und 140 °C, bevorzugt zwischen 70 und 100 °C.

Der radikalische Polymerisationsinitiator liegt üblicherweise als Azoverbindung, als Peroxid, als Persulfat oder als Hydrazon vor, wobei Azoverbindungen im Allgemeinen bevorzugt sind.

Als radikalischer Polymerisationsinitiator können insbesondere verschiedene Azoinitiatoren eingesetzt werden, welche jeweils unterschiedliche Zerfallstemperaturen aufweisen.

In der Regel läuft die radikalische Polymerisation in einem Medium ab, welches weniger als 5 Gew.-% Wasser sowie in der Gesamtheit mehr als 80 Gew.-% Copolymer, Vinyloxyalkylpolyetherderivat und Säuremonomerester enthält.

In einer bevorzugten Ausführungsform liegt in der allgemeinen Formel (I) R^{A} als Methylgruppe vor. Das entsprechende Monomer ist erhältlich durch Vinylierung (Addition an Acetylen) von Methylpolyethylenglykol.

In einer weiteren bevorzugten Ausführungsform liegt in der allgemeinen Formel (I) R^{A} als -CH₂-C(CH₃)₂-OH vor. Das entsprechende Monomer kann kostengünstig erhalten werden durch Abbruch der Alkoxylierung von Ethermakromonomeren mit Isobutylenoxid.

Oft wird in der allgemeinen Formel (I) in CₓH₂ₓ x durch 2 repräsentiert - es wird also häufig Vinyloxyethylpolyetherderivat eingesetzt.

Bevorzugt wird in der allgemeinen Formel (I) a durch eine ganze Zahl von 8 - 200 repräsentiert.

In der Regel wird ein Kettenregler, welcher bevorzugt als Mercaptoverbindung vorliegt, eingesetzt.

Bevorzugt enthält das Medium, in welchem die radikalische Polymerisation abläuft, weniger als 3 Gew.-%, bevorzugt weniger als 1 Gew.-%, Wasser. Es wäre optimal, im absolut wasserfreien Zustand zu arbeiten, wobei die damit verbundene Trocknung der entsprechenden Ausgangskomponenten jedoch recht aufwendig wäre.

Häufig wird das eingesetzte Vinyloxyalkylpolyetherderivat in der Form bereitgestellt, dass dem eingesetzen Vinyloxyalkylpolyetherderivat 1 ppm bis 1000 ppm eines als organische Verbindung vorliegenden Stabilsators zugesetzt ist, der sich für die Hemmung der oxidativen Zersetzung von in Polyethern vorhandenen Alkoxygruppen eignet.

Geeignete Stabilisatoren (für die Hemmung der oxidativen Zersetzung von in Polyethern vorhandenen Alkoxygruppen) sind häufig ausgewählt aus Diphenylaminderivaten, wie Diphenylamin als solches, polymerem Trimethyl-dihydrochinolin, alkylierten Monophenolen, wie 2,6-Di-tert.Butyl-4-methylphenol, alkylierten Hydrochinonen wie 2,6-Di-tert.Butyl-4-methoxyphenol, Alkyliden-bis-phenolen, wie 2,2'-methylen-bis-(6-tert.Butyl-4-methylphenol), phenolischen Benzyl-verbindungen, wie 1,3,5-tri-(3,5-di-tert.Butyl-4-hydroxybenzyl)-2,4,6-trimethylbenzol, Thioethern, wie 2,2'-Thio-bis-(6-tert.Butyl-4-methylphenol) oder Aminen, wie Phenothiazin. In der Praxis besonders bewährt haben sich Hydrochinonmonomethylether, Butylhydroxytoluol (BHT), Butylhydroxyanisol (BHA) und 2,6-Di-tert.-butyl-phenol (Kerobit® TP 26) sowie N,N'-Di-sec-butyl-p-phenyldiamin (Kerobit® BPD; Kerobit® der BASF SE).

Die Abreicherung von gelöstem Sauerstoff mit gelöstem Stickstoff erfolgt in der Regel durch Einleiten von Stickstoff in die entsprechende Sauerstoff enthaltende Flüssigkeit, so dass der enthaltene Sauerstoff durch Stickstoff verdrängt wird. Das Abreichern von Sauerstoff unter Anreicherung von Stickstoff bewirkt eine Zurückdrängung der oxidativen Zersetzung von in Polyethern vorhandenen Alkoxygruppen. Häufig wird das eingesetzte Vinyloxyalkylpolyetherderivat in der Weise unter Abreicherung von gelöstem Sauerstoff mit gelöstem Stickstoff angereichert, dass das eingesetzte Vinyloxyalkylpolyetherderivat gelösten Stickstoff zu gelöstem Sauerstoff in einem molaren Mengenverhältnis größer 10, bevorzugt größer 30, aufweist.

Die Erfindung betrifft weiterhin eine Copolymer aufweisende Polymerisationsmischung, welche gemäß dem vorstehend beschriebenen Verfahren herstellbar ist.

Außerdem betrifft die Erfindung die Verwendung der Copolymer aufweisenden Polymerisationsmischung als Fließmittel für hydraulische Bindemittel, insbesondere für Zement oder Gips und/oder als Fließmittel für latenthydraulische Bindemittel. Die Copolymer aufweisende Polymerisationsmischung kann beispielsweise auch als Additiv für die Zementproduktion (Mahlhilfe und " Wasserreduzierer" für reine Portlandzemente bzw. Kompositzemente) eingesetzt werden.

Nachstehend soll die Erfindung anhand von Ausführungsbeispielen näher erläutert werden.

### Synthesebeispiel 1

### (Referenzbeispiel)

In einem Vorlagebehälter 1 wird zunächst 30,5 g (0,31 mol) Maleinsäureanhydrid in 140 g (0,28 mol) Methylpolyethylenglycol-500-monovinylether gelöst. 25 g (ca. 15 Massen-%) dieser Monomermischung werden in einem beheizbaren Reaktionsgefäß, ausgestattet mit Thermometer, Rührer, Rückflusskühler und zwei Anschlüsse für separate Zuläufe, vorgelegt und auf 85 °C erwärmt. Die Inertisierung des Reaktors samt Monomermischung geschieht durch Einperlen von Stickstoff über ein Bodenventil und wird über die gesamte Reaktionszeit beibehalten. Die restliche Monomerlösung aus dem Vorlagebehälter 1 wird nun innerhalb 1,5 h zugeführt. Gleichzeitig wird aus einem separaten Vorlagebehälter 2 eine Lösung von 4,0 g Azo-dibutyronitril in 25 ml Aceton (Initiatorlösung) innerhalb 2 h dosiert. Die Reaktionsmischung färbt sich im laufe der Polymerisation zunehmend bräunlich und wird schwach viskos. Nach beendeter Zugabe der Initiatorlösung lässt man noch 1 h bei 90 °C nachrühren. Anschließend wird der Rückflusskühler durch einen Wasserabscheider ersetzt und das in der Reaktionsmischung befindliche Aceton ausgekreist. Das dunkelbraune Rohprodukt wird auf 50 °C abgekühlt und durch Zugabe von 170 g Wasser abgedünnt. Nach Neutralisation mit 21,5 g einer wässrigen 50 %igen Natronlauge erhält man eine braune Polymerlösung mit einem pH-Wert von 6,5 und einem Feststoffgehalt von 48,9 Gew.-%. Das gewichtsmittlere Molekulargewicht, welches durch Gelpermeationschromatographie unter Verwendung von Polyethylenglycol als Standard ermittelt wird, liegt bei 14.000 g/Mol.

### Synthesebeispiel 2

### (Referenzbeispiel)

In einem beheizten Reaktionsgefäß, ausgestattet mit Thermometer, Rührer und einem beheizbaren Tropftrichter werden 150 g (0,15 mol) Methylpolyethylenglycol-1000-monovinylether, der 300 ppm Butylhydroxitoluol (BHT) als Antioxidanz enthält, vorgelegt und auf 90 °C erwärmt. Durch Einperlen von Stickstoff über ein Bodenventil wird der Reaktor während der Aufheizphase inertisiert. Über einen beheizten Tropftrichter werden 15,7 g (0,16 mol) Maleinsäureanhydrid innerhalb 1,5 h zugetropft, während insgesamt 3,6 g Azo-dibutyronitril, aufgeteilt in gleichen Portionen zu je 0,6 g alle 15 Minuten als Feststoff zugegeben werden. Die Reaktionsmischung färbt sich im laufe der Polymerisation zunehmend bräunlich und wird leicht viskos. Nach Beendeter Zugabe des Initiators lässt man noch 1 h bei 90 °C nachrühren. Anschließend wird das dunkelbraune Rohprodukt auf 50 °C abgekühlt und durch Zugabe von 300 g Wasser abgedünnt. Nach Neutralisation mit 11,2 g einer wässrigen 50 %igen Natronlauge erhält man eine Polymerlösung mit einem pH-Wert von 6,4 und ein Feststoffgehalt von 35,3 Gew.-%. Das gewichtsmittlere Molekulargewicht, welches durch Gelpermeationschromatographie unter Verwendung von Polyethylenglycol als Standard ermittelt wird, liegt bei 30.900 g/Mol.

### - vergleichender Mörteltest zu Synthesebeispiel 2:

Nachstehend ist ein Mörteltest aufgeführt, bei dem das Verfahrensprodukt (Copolymerlösung) von Synthesebeispiel 2 mit einem analogen, durch wässrige Polymerisation hergestellten Produkt hinsichtlich Wirkung verglichen wird. Das Vergleichsprodukt (eine wässrige Copolymerlösung) wurde gemäß WO 2005/075529 durch radikalische Polymerisation in wässrigem Medium hergestellt. Als Standardrichtrezeptur wurde folgende Mischung gewählt:

| | |
|---|---|
| Portlandzement CEM II B/S | 270,00 g |
| Normensand (0-2 mm, EN 196-1) | 675,00 g |
| Dispergiermittel gemäß Beispiel | 0,54 g (= 0,20 Massen-% Feststoff bezogen auf Zement) |
| Anmachwasser | nach Bedarf |

Die Mörtelmischungen wurden gemäß DIN EN 196-1, Abs. 6.3 zubereitet. Zur Beurteilung des Fließverhaltens wurde das Ausbreitmaß des Mörtels nach 15 Hüben auf dem Schocktisch gemessen.

| Fließmittel | Ausbreitmaß in cm nach | |
|---|---|---|
| | 5 min. | 40 min |
| Produkt gemäß der WO 2005/075529 | 22,5 | 20,4 |
| Produkt gemäß Synthesebeispiel 2 | 22,9 | 20,6 |

Die Tabelle zeit, dass bezüglich Ausbreitmaß die verglichenen Produkte in etwa gleich gut sind und jeweils die Anforderungen eines qualitativ hochwertigen Hochleistungsfließmittels erfüllen.

### Synthesebeispiel 3

### (Vergleichsbeispiel)

Synthesebeispiel 1 wird in einem Vorlagebehälter 1 zunächst 30,5 g (0,31 mol) Maleinsäureanhydrid in 140 g (0,28 mol) Methylpolyethylenglycol-500-monovinylether gelöst. In einem separaten Vorlagebehälter 2 werden 12,1 g (0,14 mol) Acrylsäuremethylester vorgelegt. Sowohl von der Maleinsäure-Vinylether Mischung als auch vom Acrylsäuremethylester werden jeweils 10 Massen-% in ein beheizbares Reaktionsgefäß, ausgestattet mit Thermometer, Rührer, Rückflusskühler und zwei Anschlüsse für separate Zuläufe, gepumpt und auf 85 °C erwärmt. Durch Einperlen von Stickstoff über ein Bodenventil wird der Reaktor während der Aufheizphase inertisiert. Der Rest der in den Vorlagebehältern 1 und 2 befindlichen Monomere wird über die zwei Zuläufe parallel mit konstantem Volumenstrom innerhalb 1,5 h dosiert. Insgesamt 4,0 g Azo-dibutyronitril, aufgeteilt in jeweils gleiche Portionen, werden alle 15 Minuten als Feststoff zugegeben. Die Reaktionsmischung färbt sich bräunlich. Nach Beendeter Zugabe des Initiators lässt man noch 1 h bei 85 °C nachrühren. Anschließend wird das dunkelbraune Rohprodukt auf 40 °C abgekühlt und durch Zugabe von 320 g Wasser abgedünnt. Nach Neutralisation mit 54,0 g einer wässrigen 20 %igen Natronlauge erhält man eine dunkelbraune Polymerlösung mit einem pH-Wert von 6,6 und ein Feststoffgehalt von 35 Gew.-%. Das gewichtsmittlere Molekulargewicht, welches durch Gelpermeationschromatographie unter Verwendung von Polyethylenglycol als Standard ermittelt wird, liegt bei 15.500 g/Mol.

### Synthesebeispiel 4

### (erfindungsgemäß)

Gemäß Synthesebeispiel 2 wird in einem beheizten Reaktor 150 g (0,15 mol) Methyl-polyethylenglycol-1000-monovinylether, der 300 ppm Butylhydroxitoluol (BHT) als Anti-oxidanz enthält, bei 80 °C vorgelegt. Durch Einperlen von Stickstoff über ein Bodenventil wird die Monomermischung und der Reaktor inertisiert. Danach wird über den Zulauf A 7,45 g Azo-Initiator, gelöst in 30 ml Toluol, innerhalb 75 min. zudosiert. Parallel dazu wird über den Zulauf B 7,45 g (0,45 mol) Acrylsäureethylester innerhalb 60 min. zugegeben. Nach beendeter Initiator Zugabe wird die gelbbraune Polymerisationsmischung noch 45 min. bei 80 °C gerührt. Das Rohprodukt wird anschließend auf 40 °C abgekühlt und mit 150 ml Wasser abgedünnt. Es resultiert eine hellbraune Polymerlösung mit einem Feststoffanteil von 46 %. Das gewichtsmittlere Molekulargewicht, welches durch Gelpermeationschromatographie unter Verwendung von Polyethylenglycol als Standard ermittelt wird, liegt bei 35.000 g/Mol.

### Synthesebeispiel 5

### (erfindungsgemäß)

Gemäß Synthesebeispiel 2 wird in einem beheizten Reaktor 100 g (0,08 mol) α -Vinyloxy-ω-(2-methyl-propan-2-ol)-poly(oxy-1,2-ethandiyl), mit einem mittleren Molekulargewicht von 1200 g/mol und mit 300 ppm Kerobit® TP 26 stabilisiert, bei 80 °C vorgelegt. Über einen Zulauf A werden 5,6 g 2,2'-Azobis-(2,4-dimethylvaleronitril), gelöst in 15 ml Toluol (Initiatorlösung), innerhalb 60 min zugeführt. Parallel dazu wird über den Zulauf B 16,8 g (0,16 mol) Acrylsäureethylester innerhalb 60 min. dosiert. Nach Beendeter Zufuhr der Initiatorlösung lässt man noch 1 h bei 90 °C nachrühren. Nach Abkühlen auf Raumtemperatur erhält man 117 g Copolymer in Form einer hellorange gefärbten, viskosen Flüssigkeit. Das gewichtsmittlere Molekulargewicht, welches durch Gelpermeationschromatographie unter Verwendung von Polyethylenglycol als Standard ermittelt wird, liegt bei 24500 g/Mol.

Die Produkte der Synthesebeispiele 1 bis 5 sind jeweils hochwertige Dispergiermittel bzw. Fließmittel für hydraulische Bindemittel.

## Patentansprüche

1. Verfahren zur Herstellung einer Copolymer aufweisenden Polymerisationsmischung in welchem ein Vinyloxyalkylpolyetherderivat mit einem Säuremonomerester unter Bildung des Copolymers in Anwesenheit eines radikalischen Polymerisationsinitiators durch radikalische Polymerisation umgesetzt wird, wobei die radikalische Polymerisation in einem Medium abläuft, welches weniger als 25 Gew.-% Wasser sowie in der Gesamtheit mehr als 60 Gew.-% Copolymer, Vinyloxyalkylpolyetherderivat und Säuremonomerester enthält, das molare Verhältnis von eingesetztem Säuremonomerester zum eingesetzten Vinyloxyalkylpolyetherderivat 20 : 1 bis 1 : 1 beträgt und das Vinyloxyalkylpolyetherderivat vorliegt gemäß der allgemeinen Formel (I)
(I) H₂C=CH-O-(AO)ₐ-R^{A}
mit R^{A} gleich oder verschieden sowie repräsentiert durch -CH₂-C(CH₃)₂-OH, eine line-are oder verzweigte C₁-C₁₂ Alkylgruppe, C₁-Cₐ Cycloalkylgruppe, Phenylgruppe oder C₇-C₁₂ Arylalkylgruppe,
A gleich oder verschieden sowie repräsentiert durch CₓH₂ₓ mit x = 2, 3, 4 und/oder 5 sowie a gleich oder verschieden sowie repräsentiert durch eine ganze Zahl von 5 - 350,
das Molverhältnis von eingesetztem Vinyloxyalkylpolyetherderivat zum eingesetzten radikalischen Polymerisationsinitiator 2 bis 100 beträgt und das eingesetzte Vinyloxyalkylpolyetherderivat in der Form bereitgestellt wird, dass dem eingesetzen Vinyloxyalkylpolyetherderivat 0,1 ppm bis 10000 ppm eines als organische Verbindung vorliegenden Stabilisators zugesetzt ist, der sich für die Hemmung der oxidativen Zersetzung von in Polyethern vorhandenen Alkoxygruppen eignet und/oder das eingesetzte Vinyloxyalkylpolyetherderivat unter Abreicherung von gelöstem Sauerstoff mit gelöstem Stickstoff angereichert ist.

2. Verfahren nach Anspruch 1, **dadurch gekennzeichnet, dass** als Säuremonomerester Ester der Methacrylsäure, Ester der Maleinsäure und/oder Ester der Acrylsäure, bevorzugt Methylacrylat, Ethylacrylat, n-Butylacrylat und/ oder 2-Ethylhexylacrylat eingesetzt werden.

3. Verfahren nach Anspruch 1 oder 2, **dadurch gekennzeichnet, dass** die Temperatur in dem Medium, in dem die radikalische Polymerisation abläuft, während der radikalischen Polymerisation zwischen 40 und 140 °C, bevorzugt zwischen 70 und 100 °C, beträgt.

4. Verfahren nach einem der Ansprüche 1 bis 3, **dadurch gekennzeichnet, dass** der radikalischer Polymerisationsinitiator als Azoverbindung, als Peroxid, als Persulfat oder als Hydrazon, bevorzugt als Azoverbindung, vorliegt.

5. Verfahren nach Anspruch 4, **dadurch gekennzeichnet, dass** als radikalischer Polymerisationsinitiator verschiedene Azoinitiatoren eingesetzt werden, welche jeweils unterschiedliche Zerfallstemperaturen aufweisen.

6. Verfahren nach einem der Ansprüche 1 bis 5, **dadurch gekennzeichnet, dass** die radikalische Polymerisation in einem Medium abläuft, welches weniger als 5 Gew.-% Wasser sowie in der Gesamtheit mehr als 80 Gew.-% Copolymer, Vinyloxyalkylpolyetherderivat und Säuremonomerester enthält.

7. Verfahren nach einem der Ansprüche 1 bis 6, **dadurch gekennzeichnet, dass** in der allgemeinen Formel (I) R^{A} als Methylgruppe vorliegt.

8. Verfahren nach einem der Ansprüche 1 bis 6, **dadurch gekennzeichnet, dass** in der allgemeinen Formel (I) R^{A} als -CH₂-C(CH₃)₂-OH vorliegt.

9. Verfahren nach einem der Ansprüche 1 bis 8, **dadurch gekennzeichnet, dass** in der allgemeinen Formel (I) A gleich oder verschieden ist und durch CₓH₂ₓ mit x = 2 repräsentiert wird.

10. Verfahren nach einem der Ansprüche 1 bis 9, **dadurch gekennzeichnet, dass** in der allgemeinen Formel (I) a gleich oder verschieden ist sowie repräsentiert wird durch eine ganze Zahl von 8 - 200.

11. Verfahren nach einem der Ansprüche 1 bis 10, **dadurch gekennzeichnet, dass** weitere vinylische Verbindungen als Comonomer eingesetzt werden.

12. Verfahren nach einem der Ansprüche 1 bis 11, **dadurch gekennzeichnet, dass** ein Kettenregler, welcher bevorzugt als Mercaptoverbindung vorliegt, eingesetzt wird.

13. Verfahren nach einem der Ansprüche 1 bis 12, **dadurch gekennzeichnet, dass** das Medium, in welchem die radikalische Polymerisation abläuft, weniger als 3 Gew.-%, bevorzugt weniger als 1 Gew.-%, Wasser aufweist.

14. Copolymer aufweisende Polymerisationsmischung herstellbar gemäß dem Verfahren nach einem der Ansprüche 1 bis 13.

15. Verwendung einer Copolymer aufweisenden Polymerisationsmischung gemäß Anspruch 14 als Fließmittel für hydraulische Bindemittel, insbesondere für Zement oder Gips, und/oder als Fließmittel für latenthydraulische Bindemittel.

## Claims

1. Process for the preparation of a polymerization mixture comprising a copolymer, in which a vinyloxyalkylpolyether derivative is reacted with an acid monomer ester with formation of the copolymer in the presence of a free radical polymerization initiator by free radical polymerization, the free radical polymerization taking place in a medium which contains less than 25% by weight of water and in totality more than 60% by weight of copolymer, vinyloxyalkylpolyether derivative and acid monomer ester, the molar ratio of acid monomer ester used to vinyloxyalkylpolyether derivative used being 20:1 to 1:1 and the vinyloxyalkylpolyether derivative being present according to the general formula (I)
(I) H₂C=CH-O-(AO)ₐ-R^{A}
where R^{A} is identical or different and is represented by -CH₂-C(CH₃)₂-OH, a linear or branched C₁-C₁₂ alkyl group, C₁-C₈ cycloalkyl group, phenyl group or C₇-C₁₂ arylalkyl group,
A is identical or different and is represented by CₓH₂ₓ where x = 2, 3, 4 and/or 5 and
a is identical or different and is represented by an integer from 5 to 350,
the molar ratio of the vinyloxyalkylpolyether derivative used to the free radical polymerization initiator used being 2 to 100 and the vinyloxyalkylpolyether derivative used being provided in the form such that 0.1 ppm to 10 000 ppm of a stabilizer which is present as an organic compound and is suitable for inhibiting the oxidative decomposition of alkoxy groups present in polyethers is added to the vinyloxyalkylpolyether derivative used and/or the vinyloxyalkylpolyether derivative used being enriched with dissolved nitrogen with depletion of dissolved oxygen.

2. Process according to Claim 1, **characterized in that** the acid monomer ester used is an ester of methacrylic acid, an ester of maleic acid and/or an ester of acrylic acid, preferably methyl acrylate, ethyl acrylate, n-butyl acrylate and/or 2-ethylhexyl acrylate.

3. Process according to Claim 1 or 2, **characterized in that** the temperature in the medium in which the free radical polymerization takes place is between 40 and 140°C, preferably between 70 and 100°C, during the free radical polymerization.

4. Process according to any of Claims 1 to 3, **characterized in that** the free radical polymerization initiator is present as an azo compound, as a peroxide, as a persulphate or as hydrazone, preferably as an azo compound.

5. Process according to Claim 4, **characterized in that** various azo initiators which each have different decomposition temperatures are used as the free radical polymerization initiator.

6. Process according to any of Claims 1 to 5, **characterized in that** the free radical polymerization takes place in a medium which contains less than 5% by weight of water and in totality more than 80% by weight of copolymer, vinyloxyalkylpolyether derivative and acid monomer derivative.

7. Process according to any of Claims 1 to 6, **characterized in that**, in the general formula (I), R^{A} is present as a methyl group.

8. Process according to any of Claims 1 to 6, **characterized in that**, in the general formula (I), R^{A} is present as -CH₂-C(CH₃)₂-OH.

9. Process according to any of Claims 1 to 8, **characterized in that**, in the general formula (I), A is identical or different and is represented by CₓH₂ₓ where x = 2.

10. Process according to any of Claims 1 to 9, **characterized in that**, in the general formula (I), a is identical or different and is represented by an integer from 8 to 200.

11. Process according to any of Claims 1 to 10, **characterized in that** further vinylic compounds are used as a comonomer.

12. Process according to any of Claims 1 to 11, **characterized in that** a chain-transfer agent, which is preferably present as a mercapto compound, is used.

13. Process according to any of Claims 1 to 12, **characterized in that** the medium in which the free radical polymerization takes place has less than 3% by weight, preferably less than 1% by weight, of water.

14. Polymerization mixture comprising a copolymer and preparable by the process according to any of Claims 1 to 13.

15. Use of a polymerization mixture comprising a copolymer, according to Claim 14, as a superplasticizer for hydraulic binders, in particular for cement or gypsum, and/or as a superplasticizer for latently hydraulic binders.

## Revendications

1. Procédé de fabrication d'un mélange de polymérisation comprenant un copolymère, selon lequel un dérivé de polyéther de vinyloxyalkyle est mis en réaction avec un ester de monomère acide pour former le copolymère en présence d'un initiateur de polymérisation radicalaire par polymérisation radicalaire, la polymérisation radicalaire se déroulant dans un milieu qui contient moins de 25 % en poids d'eau et au total plus de 60 % en poids de copolymère, de dérivé de polyéther de vinyloxyalkyle et d'ester de monomère acide, le rapport molaire entre l'ester de monomère acide utilisé et le dérivé de polyéther de vinyloxyalkyle utilisé étant de 20:1 à 1:1, et le dérivé de polyéther de vinyloxyalkyle se présentant selon la formule générale (I)
(I) H₂C=CH-O-(AO)ₐ-R^{A}
les R^{A} étant identiques ou différents, et représentant-CH₂-C(CH₃)₂-OH, un groupe alkyle en C₁-C₁₂ linéaire ou ramifié, un groupe cycloalkyle en C₁-C₈, un groupe phényle ou un groupe arylalkyle en C₇-C₁₂,
les A étant identiques ou différents, et représentant CₓH₂ₓ avec x = 2, 3, 4 et/ou 5, et
les a étant identiques ou différents, et représentant un nombre entier de 5 à 350,
le rapport molaire entre le dérivé de polyéther de vinyloxyalkyle utilisé et l'initiateur de polymérisation radicalaire utilisé étant de 2 à 100, et le dérivé de polyéther de vinyloxyalkyle utilisé étant préparé sous une forme selon laquelle 0,1 ppm à 10 000 ppm d'un stabilisateur présent sous la forme d'un composé organique est ajouté au dérivé de polyéther de vinyloxyalkyle utilisé, ledit stabilisateur étant approprié pour inhiber la décomposition oxydative des groupes alcoxy présents dans les polyéthers, et/ou le dérivé de polyéther de vinyloxyalkyle utilisé étant enrichi avec de l'azote dissous avec appauvrissement en oxygène dissous.

2. Procédé selon la revendication 1, **caractérisé en ce que** des esters de l'acide méthacrylique, des esters de l'acide maléique et/ou des esters de l'acide acrylique, de préférence l'acrylate de méthyle, l'acrylate d'éthyle, l'acrylate de n-butyle et/ou l'acrylate de 2-éthylhexyle, sont utilisés en tant qu'esters de monomères acides.

3. Procédé selon la revendication 1 ou 2, **caractérisé en ce que** la température dans le milieu dans lequel la polymérisation radicalaire se déroule est comprise entre 40 et 140 °C, de préférence entre 70 et 100 °C, pendant la polymérisation radicalaire.

4. Procédé selon l'une quelconque des revendications 1 à 3, **caractérisé en ce que** l'initiateur de polymérisation radicalaire se présente sous la forme d'un composé azo, sous la forme d'un peroxyde, sous la forme d'un persulfate ou sous la forme d'une hydrazone, de préférence sous la forme d'un composé azo.

5. Procédé selon la revendication 4, **caractérisé en ce que** différents initiateurs azo, qui présentent chacun des températures de décomposition différentes, sont utilisés en tant qu'initiateur de polymérisation radicalaire.

6. Procédé selon l'une quelconque des revendications 1 à 5, **caractérisé en ce que** la polymérisation radicalaire se déroule dans un milieu qui contient moins de 5 % en poids d'eau et au total plus de 80 % en poids de copolymère, de dérivé de polyéther de vinyloxyalkyle et d'ester de monomère acide.

7. Procédé selon l'une quelconque des revendications 1 à 6, **caractérisé en ce que**, dans la formule générale (I), R^{A} se présente sous la forme d'un groupe méthyle.

8. Procédé selon l'une quelconque des revendications 1 à 6, **caractérisé en ce que**, dans la formule générale (I), R^{A} se présente sous la forme de -CH₂-C(CH₃)₂-OH.

9. Procédé selon l'une quelconque des revendications 1 à 8, **caractérisé en ce que**, dans la formule générale (I), les A sont identiques ou différents, et représentent CₓH₂ₓ avec x = 2.

10. Procédé selon l'une quelconque des revendications 1 à 9, **caractérisé en ce que**, dans la formule générale (I), les a sont identiques ou différents, et représentent un nombre entier de 8 à 200.

11. Procédé selon l'une quelconque des revendications 1 à 10, **caractérisé en ce que** d'autres composés vinyliques sont utilisés en tant que comonomère.

12. Procédé selon l'une quelconque des revendications 1 à 11, **caractérisé en ce qu'**un régulateur de chaîne, qui se présente de préférence sous la forme d'un composé mercapto, est utilisé.

13. Procédé selon l'une quelconque des revendications 1 à 12, **caractérisé en ce que** le milieu dans lequel la polymérisation radicalaire se déroule comprend moins de 3 % en poids, de préférence moins de 1 % en poids, d'eau.

14. Mélange de polymérisation comprenant un copolymère pouvant être fabriqué par le procédé selon l'une quelconque des revendications 1 à 13.

15. Utilisation d'un mélange de polymérisation comprenant un copolymère selon la revendication 14 en tant que fluidifiant pour liants hydrauliques, notamment pour ciment ou gypse, et/ou en tant que fluidifiant pour liants hydrauliques latents.
